(19) Europäisches Patentamt / European Patent Office / Office européen des brevets

(11) **EP 3 137 859 B1**

(12) **FASCICULE DE BREVET EUROPEEN**

(45) Date de publication et mention de la délivrance du brevet:
**23.09.2020 Bulletin 2020/39**

(21) Numéro de dépôt: **15725810.4**

(22) Date de dépôt: **27.04.2015**

(51) Int Cl.:
***G01G 19/02*** *(2006.01)*

(86) Numéro de dépôt international:
**PCT/FR2015/051137**

(87) Numéro de publication internationale:
**WO 2015/166180 (05.11.2015 Gazette 2015/44)**

(54) **PROCÉDÉ D'ESTIMATION OPTIQUE DE LA MASSE D'UN VEHICULE GARÉ EN PENTE**

VERFAHREN ZUR OPTISCHEN BESTIMMUNG DER MASSE EINES FAHRZEUGS WELCHES AUF EINEM GEFÄLLE GEPARKT IST.

METHOD FOR THE OPTICAL ESTIMATION OF THE MASS OF A VEHICLE PARKED ON A SLOPE.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2014 FR 1453858**

(43) Date de publication de la demande:
**08.03.2017 Bulletin 2017/10**

(73) Titulaire: **Renault SAS**
**92100 Boulogne Billancourt (FR)**

(72) Inventeurs:
• **PITA-GIL, Guillermo**
**75014 Paris (FR)**
• **DESFRICHES, Christophe**
**27120 Pacy-sur-Eure (FR)**

(56) Documents cités:
**WO-A1-2014/020263      DE-A1- 2 640 283**
**US-A1- 2011 267 200**

**Description**

L'invention a pour objet l'estimation de la masse d'un véhicule par mesure optique. De telles mesures de masse sont par exemple décrites dans le brevet FR 2 994 259 qui propose de calculer une valeur de charge sur un train de roues du véhicule, en fonction du débattement de ce train estimé par analyse d'image. L'image est acquise en réalisant une photographie d'une roue du véhicule et d'une portion du passage de la roue à l'aide d'une ordiphone. Une méthode d'analyse d'images est notamment décrite dans le document pour déterminer la position du centre de la roue par rapport à un bord du passage de roue. Le dispositif propose en outre de placer l'ordiphone dans une station d'accueil du véhicule afin de mesurer une inclinaison du véhicule. Cette inclinaison peut être prise en compte dans le calcul ultérieur de la masse du véhicule. Cette inclinaison peut également être calculée à partir de la distance roue/passage de roue mesurée sur un train de roues avant et d'une distance roue/passage de roue mesurée sur un train de roues arrière du véhicule. La méthode de mesure avec station d'accueil oblige à des allers/retours entre l'intérieur et l'extérieur du véhicule, pour d'une part, mesurer l'inclinaison du véhicule en plaçant l'ordiphone dans sa station d'accueil et pour, d'autre part, effectuer l'analyse d'image des roues du véhicule. Le document ne propose pas de prendre en compte l'inclinaison de la chaussée dans le calcul de la masse du véhicule. Or cette inclinaison de la chaussée a une influence sur la manière dont la masse du véhicule se répercute sur le débattement des différentes roues, notamment du fait de la différence de rigidité entre les amortisseurs avant et arrière du véhicule. Le document WO 2014/020263 A1 divulgue un procédé d'estimation de la masse d'un véhicule à l'aide d'un ordiphone.

L'invention a pour but de proposer une méthode de détermination de la masse d'un véhicule, par exemple d'un véhicule utilitaire, à l'aide d'un ordiphone, permettant d'estimer de manière simple la pente de la chaussée sur laquelle est garé le véhicule, et permettant de prendre en compte cette pente dans l'estimation de la masse du véhicule.

L'invention propose à cette fin un procédé de détermination à l'aide d'un ordiphone de la masse d'un véhicule selon la revendication 1 dont les roues sont montées à l'intérieur de passages de roues, comprenant les étapes suivantes :

- a) mémoriser des valeurs physiques caractéristiques du véhicule, par exemple en consultant une base de données de véhicules en fonction d'un identifiant permettant d'identifier le modèle du véhicule, et en chargeant dans l'ordiphone une série de valeurs caractéristiques du modèle identifié. Par valeurs physiques, on entend ici des valeurs dépendant de la géométrie du véhicule, comme une hauteur du passage de roue quand le véhicule est à vide, un diamètre de contour de passage de roue, mais pouvant également dépendre de propriétés mécaniques des constituants du véhicule, par exemple pouvant dépendre de la raideur des ressorts de suspension du véhicule, ou pouvant dépendre de la résistance des éléments du véhicule, comme la valeur maximale de charge autorisée du véhicule. Les valeurs peuvent être mémorisées d'avance dans l'ordiphone, ou peuvent être consultées juste avant ou pendant la détermination de la masse en reliant l'ordiphone à une base de données extérieure, éventuellement à une base de données distante,
- b) afficher sur l'écran de l'ordiphone, le dessin d'une ligne sensiblement parallèle à un axe de l'ordiphone, et se trouvant de préférence dans une première moitié inférieure de l'écran, et superposer ladite ligne à une image filmée par l'ordiphone,
- c) placer l'ordiphone dans un plan vertical parallèle à une roue du véhicule de manière à ce que l'image comprenne la roue du véhicule et au moins une portion d'un contour de passage de roue associé.

L'ordiphone est de préférence associé à un appareil de prise de vue intégré à l'ordiphone. L'ordiphone est équipé d'au moins un accéléromètre permettant d'évaluer une position par rapport à la verticale de l'ordiphone. Typiquement, un logiciel enregistré sur l'ordiphone et activé par l'utilisateur peut déclencher la superposition de ladite ligne apparaissant comme fixe par rapport à l'écran, et apparaissant en surimpression par rapport à l'image filmée par l'ordiphone. L'utilisateur de l'ordiphone peut alors placer l'ordiphone, de préférence dans un premier plan vertical parallèle à l'axe longitudinal du véhicule, de manière à ce que l'image comprenne une roue du véhicule et au moins une portion du contour de passage de roue associé.

- d) orienter l'ordiphone suivant la pente de la chaussée,
- e) estimer l'angle d'inclinaison de la chaussée sur laquelle se trouve le véhicule. L'utilisateur de l'ordiphone peut par exemple tourner l'ordiphone autour d'un axe perpendiculaire au premier plan, et le déplacer dans ce plan jusqu'à rendre la ligne tangente à l'image du point de contact entre la chaussée et la roue, la ligne étant orientée parallèlement à la chaussée. L'utilisateur peut alors envoyer un signal au logiciel, qui est configuré pour déclencher une mesure de l'inclinaison de l'ordiphone par rapport à la verticale, par exemple au moyen de valeurs reçues à partir d'au moins un accéléromètre présent dans l'ordiphone. De manière avantageuse, le logiciel est en outre configuré pour estimer un angle entre le plan de l'ordiphone et le premier plan vertical, et pour envoyer un message d'alerte si cet angle est supérieur à un angle seuil,
- f) analyser une image acquise par l'ordiphone pour déterminer une distance entre la roue et le contour du passage de roue. Par exemple, lorsque l'utilisateur envoie un signal au logiciel pour estimer l'angle d'inclinaison de la chaussée, le logiciel peut être configuré pour déclencher suite à ce même signal une acquisition de l'image en cours de visualisation sur l'écran. On peut envisager des variantes de réalisation dans lesquelles l'utilisateur doit donner deux signaux successifs pour déclencher l'estimation de l'angle de la chaussée et l'acquisition d'image. La distance entre la roue et le contour de passage de roue peut être par exemple une distance entre le centre de la roue et le centre d'un cercle tangent au contour de passage de roue, ou une distance entre le centre de la roue et un point particulier du contour de passage de roue,

- g) calculer une masse du véhicule en prenant en compte l'inclinaison de la chaussée, la distance entre la roue et le contour du passage de roue, et les valeurs physiques caractéristiques du véhicule. De manière avantageuse, les valeurs géométriques caractéristiques peuvent en outre comprendre une distance entre la roue et le contour du passage de roue déterminée précédemment sur le véhicule, par exemple déterminée de manière périodique quand le véhicule est à vide, sans passagers et sans chargement autre que l'équipement usuel du véhicule. Cette actualisation de la hauteur à vide du passage de roues permet de prendre en compte l'évolution des éléments constitutifs du véhicule, par exemple un affaissement des suspensions.

De manière avantageuse, le logiciel est en outre configuré pour aviser l'utilisateur de l'ordiphone d'un niveau de charge chiffré ou d'un niveau de charge qualitatif du véhicule.

Selon un premier mode de réalisation, le niveau de charge est exprimé en valeur chiffrée, par exemple par un affichage sur l'écran de l'ordiphone, ou par synthèse vocale. La masse affichée peut être la masse totale du véhicule, ou/et peut mentionner la charge utile mesurée en excès de la masse du véhicule à vide.

Selon un autre mode de réalisation, qui peut se combiner au précédent, le niveau de charge du véhicule peut être exprimé de manière qualitative, en mentionnant si la masse déterminée dépasse ou non un seuil de masse autorisé. Le seuil de masse autorisé peut faire parti des valeurs physiques caractéristiques du véhicule.

Le procédé peut être appliqué à un véhicule automobile ou à un véhicule tracté, tel qu'une remorque ou une caravane.

Selon un mode de réalisation, le logiciel est configuré pour calculer la masse du véhicule à partir d'une seule analyse d'image. De manière préférentielle, l'analyse d'image est alors effectuée sur une roue arrière du véhicule. Selon un autre mode de réalisation, le logiciel est configuré pour calculer la masse du véhicule à partir d'au moins deux analyses d'images, sans que le logiciel demande une identification de la position de la roue du véhicule. De manière préférentielle, la prise de vue est alors effectuée plusieurs fois sur la même roue arrière, ou au moins une fois sur chaque roue arrière d'un même essieu du véhicule. Selon un autre mode de réalisation, le logiciel est configuré pour effectuer une analyse d'image sur toutes les roues d'au moins deux essieux du véhicule, dans un ordre prédéfini. Selon encore un autre mode de réalisation, le logiciel est configuré pour effectuer une analyse d'image sur plusieurs roues du véhicule, appartenant à deux essieux différents, et pour recevoir avant ou après chaque analyse d'image, une indication sur la position de la roue par rapport au véhicule. Dans les deux derniers modes de réalisation, le logiciel prend en compte toutes les analyses d'image pour le calcul de la masse du véhicule, mais utilise une formule de calcul dans laquelle la prise en compte de la distance roue-passage de roue est différente en fonction de la position de la roue sur le véhicule.

Une fois déterminée la distance entre la roue et le contour du passage de roue, on calcule une première valeur de masse en fonction de cette distance, et on divise cette première valeur de masse par un coefficient qui est fonction de l'angle d'inclinaison de la chaussée, pour obtenir une masse corrigée.

Avantageusement, le coefficient est calculé en fonction de l'inclinaison de la chaussée, comme la différence entre une valeur proportionnelle au cosinus de l'angle d'inclinaison, et une constante multipliée par le sinus de l'angle d'inclinaison.

Selon un mode de réalisation avantageux, on évalue périodiquement la distance entre la roue et le contour du passage de roue dans une condition prédéfinie de charge du véhicule, et on utilise cette valeur pour les calculs ultérieurs de masse.

Avantageusement, on peut en outre superposer à l'image affichée sur l'écran de l'ordiphone, une croix et/ou un ou plusieurs cercles, destinés à être centrés sur l'image de la roue.

On peut également superposer à l'image affichée sur l'écran de l'ordiphone, un ou plusieurs masques surfaciques semi transparents, texturés et/ou modifiant localement le contraste de l'image , délimités par lesdits un ou plusieurs cercles, de manière à faciliter à une personne positionnant l'ordiphone, l'évaluation du centrage des cercles par rapport aux surfaces non masquées.

On peut évaluer une masse corrigée pour chacune des roues du véhicule, et effectuer une somme des masses corrigées pour estimer la masse totale du véhicule.

L'invention propose également un produit programme d'ordinateur chargeable directement dans une mémoire d'un ordiphone, comprenant des portions de code de logiciel permettant l'exécution par l'ordiphone des étapes a, b, e, f d'un procédé tel que décrit précédemment.

D'autres buts, caractéristiques et avantages de l'invention apparaîtront à la lecture de la description suivante, donnée uniquement à titre d'exemple non limitatif, et faite en référence aux dessins annexés, sur lesquels :

- la figure 1 est la représentation schématique d'un véhicule et d'un ordiphone au cours d'une estimation de masse selon l'invention,
- la figure 2 est une représentation schématique d'un ordiphone au cours d'une estimation de masse du véhicule de la figure 1,
- la figure 3 est une représentation géométrique d'un des angles d'inclinaison de l'ordiphone pris en compte dans un procédé selon l'invention,
- la figure 4 est une représentation géométrique d'un autre angle d'inclinaison de l'ordiphone pris en compte au cours d'un procédé selon l'invention,
- la figure 5 est un algorithme simplifié d'un procédé d'estimation de masse de véhicule selon l'invention.

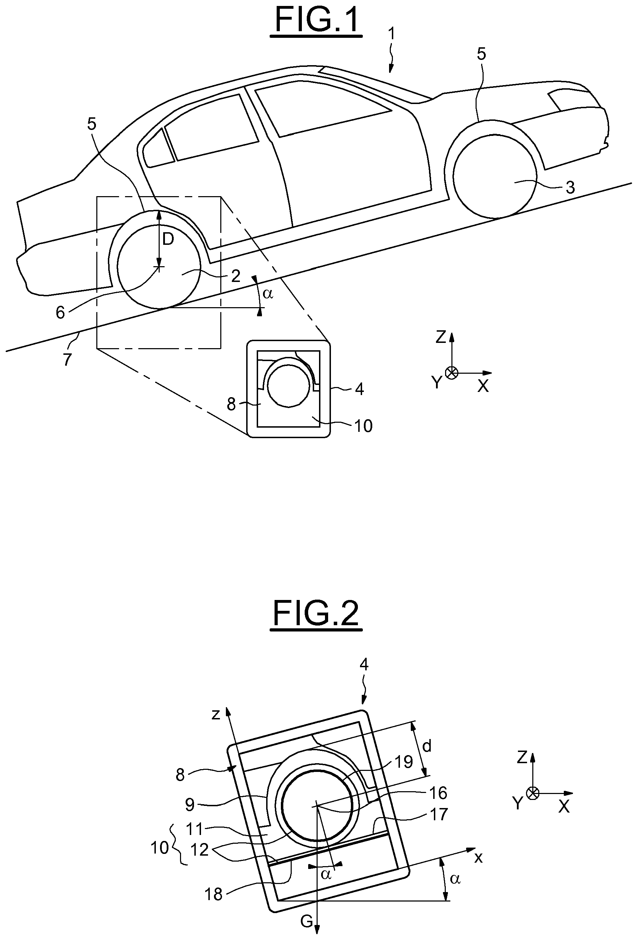

Tel qu'illustré sur la figure 1, un véhicule 1 est garé sur une chaussée en pente représentée ici par une ligne 7 de contact entre les roues 2, 3 du véhicule et la chaussée.

Les coordonnées spatiales liées à la chaussée sont repérées par un repère orthonormé X, Y, Z. X correspond à un axe horizontal, Z à un axe vertical, le plan XZ étant orienté de manière à contenir la direction longitudinale ou direction d'avancement normale du véhicule. L'inclinaison de la chaussée est opérée par un angle α représentant l'angle entre la ligne 7 et l'axe horizontal X. Une inclinaison α nulle correspond à une route horizontale.

Le véhicule 1 est ici un véhicule automobile avec un train de roues arrière comprenant deux roues 2 et un train de roues avant comprenant deux roues 3. Les roues 2, 3 sont chacune montées à l'intérieur de passage de roues dont le contour 5 est solidaire de la caisse du véhicule. La caisse et le contour 5 du passage de roue sont reliés par des amortisseurs et des ressorts -non représentés- à un châssis du véhicule comprenant les axes des roues 2, 3. Le contour 5 de chaque passage de roue est donc mobile par rapport au centre 6 de la roue associée, en fonction du débattement de la caisse par rapport au châssis. Dans l'exemple illustré, le contour 5 du passage de roue est délimité par la carrosserie du véhicule et laisse visible l'intégralité de la roue. On peut également envisager des variantes dans lesquelles le contour 5 du passage de roue masque une portion de la roue. De manière plus générale, on peut considérer comme contour de passage de roue, un ensemble de points visuellement identifiable et solidaire de la caisse du véhicule, par exemple un contour de garde-boue solidaire de la caisse du véhicule.

Dans l'exemple illustré sur la figure 1, le véhicule est garé sur une chaussée en pente, l'angle α étant supérieur à 0. Un utilisateur du véhicule ou un opérateur (non représenté) utilise un ordiphone 4 pour acquérir une image 10 visible sur l'écran 8 de visualisation de l'ordiphone. Sur l'image 10 est visible ici la roue arrière 2 et une portion du contour 5 de passage de roue associé. L'opérateur utilisant l'ordiphone 4 positionne l'ordiphone à l'aide de l'image 10 affichée sur l'écran 8 de l'ordiphone et déclenche un processus programmé dans l'ordiphone, comprenant au moins une étape d'acquisition d'images, une étape de traitement de l'image, et une estimation de l'inclinaison de l'ordiphone par rapport à un axe vertical. L'analyse d'image permet de comparer un écart du contour 5 de passage de roue par rapport au centre 6 de la roue, relativement à un écart de référence entre le contour 5 de passage de roue et le centre 6 de la roue. L'écart de référence peut typiquement correspondre à un écart théorique lorsque le véhicule ne transporte pas de charge utile. Cet égard de référence peut être réactualisé par une mesure effectuée par l'opérateur quand l'occasion s'en présente, et que le véhicule se trouve être à vide, c'est-à-dire sans charge utile chargée dans le véhicule. Par charge utile, on entend une charge variable que l'on peut placer à bord du véhicule et qui vient s'ajouter à une charge de référence du véhicule. La charge de référence peut comprendre, en fonction de la définition qu'on lui donne, le poids du véhicule, le poids de l'équipement destiné à rester en permanence à bord du véhicule, le poids de la réserve d'essence...

Une méthode d'analyse d'image en vue d'estimer une distance entre le contour 5 du passage de roue et le centre 6 de la roue est par exemple donnée dans la demande de brevet FR 2 994 259. D'autres méthodes d'analyse d'image sont envisageables, et une distance peut être calculée entre deux autres éléments géométriques, par exemple entre le centre de la roue et un point du contour de passage de roue. Dans l'exemple illustré sur les figures 1 et 2, l'ordiphone 4 détermine une distance « d » sur l'image 10 entre la représentation 9 du contour 5 de passage de roue, et la représentation 16 du centre 6 de la roue arrière du véhicule. A l'aide d'une base de données indiquant la dimension réelle d'un des éléments visibles sur l'image analysée, par exemple indiquant le diamètre réel de la jante de la roue, l'ordiphone applique un facteur d'échelle à l'image analysée et en déduit la distance « D » entre le centre 6 de la roue et le contour 5 du passage de roue. Selon une variante de réalisation, la distance de prise du vue du cliché de l'analyse d'image peut être imposée, et le facteur d'échelle peut être constant.

Une fois que l'ordiphone a estimé la distance entre le centre 6 de la roue et le contour 5 du passage de roue, l'ordiphone peut calculer le débattement de la roue, c'est-à-dire la variation de cette distance par rapport à un état de référence -par exemple un état à vide-du véhicule. Une distance de référence peut être enregistrée dans une base de données qui tient compte du modèle du véhicule, de la position d'assemblage de la roue sur le véhicule (roue avant ou roue arrière). Cette distance de référence peut être issue d'une base de données externe à l'ordiphone ou peut être le résultat d'une mesure antérieure avec le même ordiphone sur le même véhicule, par exemple une mesure effectuée par une personne en charge de la gestion du véhicule lorsque le véhicule est à vide et sur terrain plat.

L'ordiphone 4 peut ensuite consulter un abaque reliant le débattement de la roue, et la masse supportée par le ressort de suspension associé à la roue. Selon une variante de réalisation, au lieu d'utiliser un abaque, l'ordiphone 4 pourrait lire dans une base de données des valeurs de raideur et des caractéristiques géométriques et pourrait recalculer lui-même, par un calcul de type raideur de ressort, la masse appliquée sur le ressort de suspension.

La base de données contenant les indications utiles à la détermination du facteur d'échelle, contenant des valeurs de distance de référence roue-passage de roue, contenant l'abaque, ou contenant des valeurs de raideur, contenant éventuellement une ou des valeurs de charge maximales admissibles par le véhicule, peut être soit chargée sur l'ordiphone 4 de manière à y être disponible pour toutes les mesures ultérieures sur ce type de véhicule, ou peut être une base consultable à distance par l'ordiphone.

La base de données une fois chargée dans l'ordiphone, elle peut être enrichie de valeur de contrôle, telle que des mesures de débattement à vide effectuées par l'opérateur lui-même.

La figure 2 illustre un ordiphone 4 pendant une estimation de la masse du véhicule 1 de la figure 1, garé sur une chaussée de pente $\alpha$. On retrouve sur la figure 2 des éléments communs à la figure 1, les mêmes éléments étant désignés par les mêmes références. On repère les axes propres de l'ordiphone par un axe x -correspondant ici au plus petit axe de l'écran-, un axe z -parallèle ici au plus grand axe de l'écran 8- et un axe y -selon l'épaisseur de l'ordiphone- qui est ici placé parallèlement à l'axe Y transversal au véhicule. On a également représenté sur la figure 2 la direction G correspondant à la verticale selon le sens d'application des forces de pesanteur sur l'ordiphone.

Afin de réaliser l'estimation de masse pour un véhicule garé sur une chaussée en pente, l'opérateur place l'ordiphone 4 de manière à ce que le plan de l'écran 8 de l'ordiphone se trouve dans un plan parallèle à l'axe X-Z. Le plan de l'écran de l'ordiphone se trouve donc parallèle à un plan médian longitudinal du véhicule. L'opérateur active un logiciel d'estimation de masse qui met en marche la caméra de l'ordiphone 4 et affiche une image de contrôle sur l'écran 8 de l'ordiphone, montrant les éléments du véhicule filmés par la caméra. Le logiciel superpose à l'image de contrôle de la caméra, une ligne 18 qui est fixe par rapport à l'écran. L'opérateur superpose la ligne 18 à une ligne 17 de l'image de contrôle, correspondant sensiblement à une ligne 7 de contact entre la roue et la chaussée. Par exemple, l'opérateur incline l'ordiphone 4 autour de l'axe y, tout en le gardant dans un plan vertical parallèle au plan X-Z, jusqu'à ce que l'axe x de l'ordiphone forme un angle sensiblement égal à l'angle $\alpha$ avec l'axe horizontal X. En pratique l'opérateur peut incliner l'ordiphone 4 et le déplacer jusqu'à ce que la ligne 18 apparaisse comme tangente au point de contact entre l'image de la roue et l'image de la chaussée. L'utilisateur active alors une mesure par l'ordiphone, par exemple en touchant une zone dédiée de l'écran tactile, ou en appuyant sur un bouton prédéfini de l'ordiphone. L'ordiphone 4 est équipé d'un ou de plusieurs accéléromètres. Ces accéléromètres sont par exemple utilisés pour améliorer l'ergonomie de l'affichage, et pour faire tourner certaines images affichées en fonction de la position détectée de l'ordiphone par rapport à la verticale. Dans le cadre du procédé de détermination de masse, le logiciel de détermination de masse reçoit les valeurs du ou des accéléromètres de l'ordiphone et en déduit l'angle d'inclinaison $\alpha$ de l'ordiphone, qui correspond alors sensiblement à l'angle $\alpha$ de la chaussée. Le logiciel est configuré pour vérifier que l'ordiphone se trouve sensiblement dans un plan vertical X-Z pendant la mesure.

Le logiciel peut estimer pour cela un angle d'inclinaison $\beta$ de l'ordiphone par rapport au plan vertical X-Z.

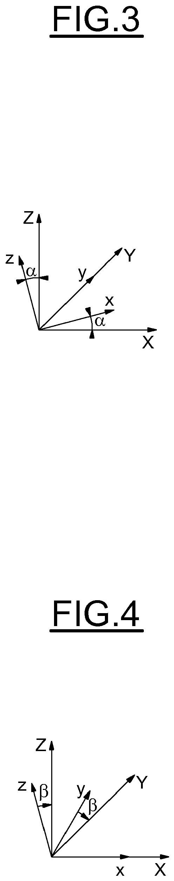

Les figures 3 et 4 illustrent deux angles $\alpha$ et $\beta$ que le logiciel peut prendre en compte. Comme illustré sur la figure 3 l'angle $\alpha$ correspond à une rotation de l'ordiphone autour de l'axe y perpendiculaire à l'écran de l'ordiphone. Cet angle $\alpha$ sert à estimer l'inclinaison de la chaussée.

La figure 4 illustre l'angle $\beta$ qui devrait être également proche de 0 pendant la mesure. Cet angle correspond à une rotation de l'ordiphone autour de l'axe x. L'axe x correspond à l'axe de l'écran parallèlement auquel est tracée la ligne fixe 18. Si cet angle $\beta$ est supérieur à une valeur seuil, le logiciel affiche un message d'erreur ou émet un message d'erreur sonore pour signaler que l'ordiphone n'est pas placé dans le plan souhaité. En effet, une valeur importante de $\beta$ risque de fausser l'estimation de l'angle $\alpha$ de la chaussée et risque également d'entacher la précision de la mesure de la distance D.

En revenant à la figure 2, celle-ci illustre l'ordiphone 4 après rotation de ce dernier par l'utilisateur afin de superposer la ligne 17 de l'image filmée avec la ligne 18 affichée comme ligne fixe à l'écran. Il se peut que la ligne 17 ne soit pas visible en tant que ligne nette 17 sur l'écran de l'ordiphone. Dans ce cas l'utilisateur peut placer la ligne 18 de manière à ce qu'elle soit tangente avec l'image de la roue au niveau du point de contact de la roue avec le sol, et de manière à ce que cette ligne 18 soit sensiblement parallèle au sol. Le logiciel peut éventuellement être configuré pour afficher sur l'écran 8 des éléments de superposition autres que la ligne fixe 18. L'ordiphone peut par exemple être configuré pour afficher un cercle 19 correspondant à un cercle repérable visuellement sur la roue du véhicule, par exemple un cercle destiné à être superposé à une limite de jante ou à être superposée sur les boulons de maintien de la jante, ou sur le contour du pneu.

Selon les modes de réalisation, le mode d'emploi du logiciel de détermination peut imposer de superposer le cercle 19 à un cercle particulier de l'image, ou peut simplement requérir que le cercle de superposition 19 soit centré par rapport à l'image de la roue.

Une fois donc l'ordiphone positionné parallèlement à la chaussé à l'aide de l'image de contrôle et de la ligne 18, suite à une validation de la position de l'ordiphone par l'opérateur, le logiciel estime l'angle d'inclinaison de la chaussée grâce à son ou ses accéléromètres, et estime le débattement de la roue par analyse d'image. Le logiciel peut ensuite consulter un abaque, en déduire une première valeur $M_1$ de masse appliquée au ressort de suspension associé à la roue et ne tenant pas compte de l'inclinaison de la chaussée, puis appliquer un facteur correctif fonction de l'angle $\alpha$ pour déterminer une masse corrigée appliquée au ressort de suspension associé à la roue, et tenant compte du fait que le véhicule est garé en pente.

Afin de tenir compte du fait que quand la voiture est stationnée en pente, la force de la pesanteur est appliquée en oblique par rapport au plan de base du véhicule, on divise la première masse estimée par une valeur faisant intervenir le cosinus de l'angle $\alpha$. En outre, on sait que la masse du véhicule ne se répartit pas de manière équivalente sur les roues avant et sur les roues arrière du véhicule, du fait notamment de la répartition spatiale des points de freinage. Ce phénomène, appelé effet Brouilhet, fait qu'au final le coefficient correctif par lequel on divise la masse lue dans l'abaque n'est plus directement le cosinus de l'angle a, mais ce cosinus de l'angle $\alpha$ diminué d'une valeur Ksina, proportionnelle au sinus de l'angle $\alpha$. Le coefficient de proportionnalité K, également appelé coefficient de Brouilhet, est fonction du modèle de véhicule et est différent en général entre les roues avant et les roues arrière du véhicule. Le coefficient de Brouilhet à prendre en compte peut également être différent suivant que le véhicule est garé dans le sens montant ou dans le sens descendant par rapport à la pente de la chaussée. Dans certains cas, le coefficient K peut être égal à 0.

Autrement dit pour chaque roue on calcule d'abord à l'aide de l'abaque une masse $M_1$, et on calcule ensuite une masse corrigée M suivant la formule :

$$M = \frac{M_1}{\cos\alpha - K\sin\alpha} \qquad (\text{Equation 1})$$

Suivant les modes de réalisation, l'abaque peut indiquer une masse pour une roue du véhicule, ou une masse de l'ensemble du véhicule.

Selon une variante de réalisation, l'estimation de la masse peut se faire à partir d'une analyse d'image sur une seule roue du véhicule. Dans ce cas l'analyse est effectuée de préférence sur une roue arrière du véhicule pour les véhicules transportant leur masse utile plutôt vers l'arrière du véhicule.

Selon un mode de réalisation, une moyenne de masse peut être effectuée en acquérant plusieurs fois l'image de la même roue du véhicule ou en acquérant une image de chaque roue d'un même essieu de véhicule.

En fonction du mode de réalisation, le logiciel effectue une pondération des valeurs de masse estimées pour délivrer une valeur de masse correspondant à la masse totale appliquée sur toutes les roues du véhicule, par exemple sur les quatre roues du véhicule.

Selon un autre mode de réalisation, le logiciel est configuré pour effectuer une ou des analyses d'images avec des paramètres spécifiques sur au moins une roue arrière du véhicule, et est configuré pour effectuer une ou plusieurs analyses d'images avec des paramètres spécifiques sur au moins une roue avant du véhicule. Avant ou après chaque saisie d'image l'opérateur doit alors renseigner la position de la roue (avant, arrière, droite ou gauche), ou l'opérateur doit effectuer les saisies dans un ordre requis par les messages de guidage du logiciel. La position de la roue par rapport au véhicule, ainsi que l'angle d'inclinaison de la chaussée mesuré par l'ordiphone, permettent à l'ordiphone de déterminer également si le véhicule est garé dans le sens de la pente montante ou dans le sens de la pente descendante et d'appliquer le bon coefficient de Brouilhet.

Selon un mode de réalisation préférentiel, l'opérateur effectue une saisie d'images en position inclinée de l'ordiphone pour chacune des roues arrière et pour chacune des roues avant du véhicule et le logiciel effectue au final une somme des masses estimées comme étant les masses appliquées sur chacun des ressorts de suspension associés à chacune des roues.

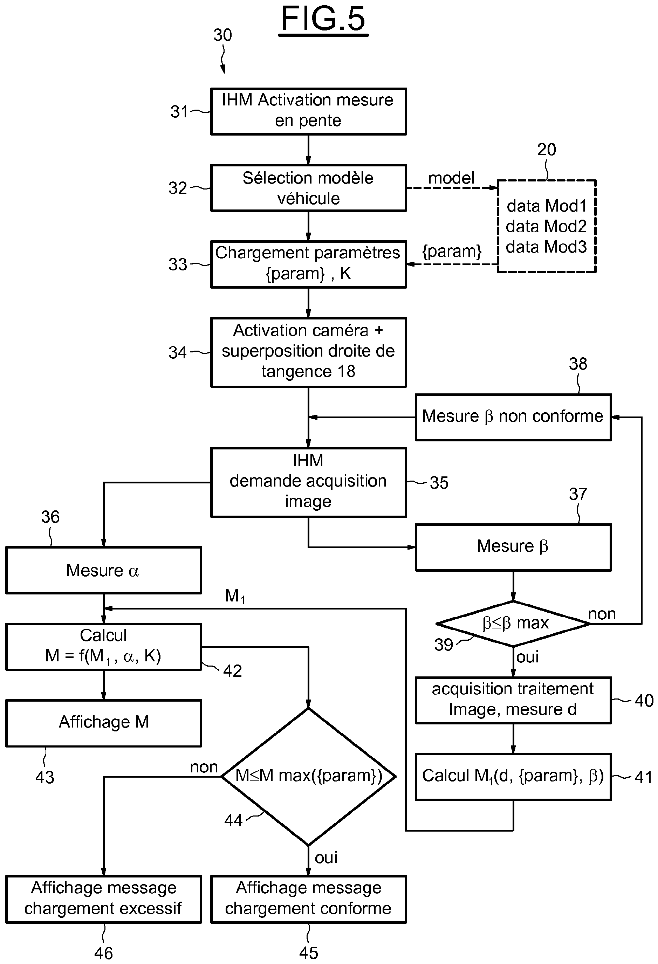

La figure 5 illustre d'une manière simplifiée un algorithme 30 d'estimation d'une masse appliquée sur un ressort de suspension d'une roue suivant un procédé selon l'invention. Comme mentionné précédemment, en effectuant une ou plusieurs mesures sur une ou plusieurs roues du véhicule on peut en déduire par la suite la masse totale du véhicule. Telle qu'illustré sur la figure 5 à une étape 31, un opérateur active le logiciel enregistré dans l'ordiphone 4 des figures 1 et 2, par exemple à l'aide d'une interface homme/machine « IHM ». Si le logiciel n'est pas pré-paramétré pour fonctionner sur un modèle de véhicule particulier, alors à une étape 32, l'utilisateur peut entrer une donnée caractéristique du véhicule, par exemple une référence de modèle de véhicule ou un numéro de plaque d'immatriculation. En fonction de ce paramètre, l'ordiphone consulte, à une étape 20, une base de données data $Mod_x$ interne ou externe à l'ordiphone, dans laquelle il récupère une série de données {param} à une étape 33. Le groupe de paramètres {param} peut notamment comprendre un à quatre coefficients de Brouilhet K, par exemple un coefficient en pente montante et un coefficient en pente descendante associé à chacun des trains de roue du véhicule. Une fois chargé les paramètres caractéristiques du véhicule, l'ordiphone se place à une étape 34 en mode acquisition et affiche sur l'écran l'image captée par la caméra de l'ordiphone, à laquelle il superpose au moins une ligne 18 fixe par rapport à l'écran. L'utilisateur repositionne alors l'ordiphone de manière à ce que la ligne 18 soit tangente à la roue au niveau du contact entre la roue et le sol, tel que précédemment décrit. Une fois que l'image à l'écran lui semble conforme aux critères de tangence, éventuellement également conforme à des critères de superposition d'autres éléments affichés, l'opérateur déclenche une étape 35 l'acquisition de l'angle $\alpha$ et l'acquisition de l'image servant à estimer le débattement de la roue. L'ordiphone effectue alors une acquisition des valeurs d'accéléromètres interne à l'ordiphone et en déduit une mesure d'angle $\alpha$ à une étape 36 et une mesure d'angle $\beta$ à une étape 37. A une étape 39 l'ordiphone vérifie si l'angle $\beta$ est inférieur à une valeur seuil. Si ce n'est pas le cas à une étape 38, l'ordiphone émet un message d'erreur et se remet en configuration d'acquisition d'images en attendant une nouvelle demande d'acquisition 35. Si l'angle $\beta$ à l'étape 39 est inférieur à la valeur seuil, à une étape 40 l'ordiphone effectue l'analyse d'images, mesure la distance d entre l'image de la roue et l'image du contour du passage de roue, et applique un facteur d'échelle pour en déduire la distance réelle D caractéristique du débattement de la roue. A une étape 41 l'ordiphone utilise un abaque ou effectue un calcul de raideur et détermine une première masse $M_1$ en fonction de la distance estimée et des paramètres caractéristiques du modèle du véhicule. L'estimation de la distance D peut être indépendante de l'angle $\beta$, ou peut faire intervenir l'angle $\beta$ pour tenir compte de la contraction de l'image dans le sens vertical lorsque l'on incline l'ordiphone. La valeur de masse $M_1$ est ensuite divisée à une étape de calcul 42 par un coefficient correcteur fonction de l'angle $\alpha$ déterminé à l'étape 36. Le coefficient correcteur peut faire intervenir le coefficient de Brouilhet K associé à la roue. La masse M résultante peut être affichée en tant que telle à une étape 43 sur l'écran de l'ordiphone. L'ordiphone peut également être configuré pour comparer cette masse M à une masse maximale autorisée Mmax. Par exemple à une étape 44, l'ordiphone compare ici la masse M à la masse maximale autorisée Mmax, et suivant le résultat du test, affiche à une étape 45 un message signalant que le chargement est conforme ou affiche à une étape 46 un message signalant que le chargement est excessif.

Dans d'autres variantes de réalisation, l'affichage de la masse peut être effectué après que la masse totale du véhicule ait été calculée en fonction des masses appliquées sur chacune des roues.

L'invention ne se limite pas aux exemples de réalisation décrits et peut se décliner en de nombreuses variantes. L'acquisition d'angle et d'analyse d'images peut être effectuée sur une ou plusieurs roues du véhicule. Le masque de saisie de l'image peut comporter en plus de la ligne 18, d'autres éléments se superposant à l'image tels qu'un cercle et/ou une croix. Le procédé peut être appliqué à un véhicule automobile ou à un véhicule tracté, tel qu'une remorque ou une caravane.

Le procédé selon l'invention permet d'estimer de manière optique la masse, et notamment la masse utile d'un véhicule en simplifiant la procédure de saisie par l'utilisateur qui effectue simultanément une demande d'acquisition d'angle et une demande d'acquisition d'images à analyser. On obtient une estimation de déclivité plus précise que par exemple en positionnant de manière imparfaite l'ordiphone dans une station d'accueil du véhicule ou en posant l'ordiphone au sol.

**Revendications**

1. Procédé de détermination à l'aide d'un ordiphone de la masse d'un véhicule (1) comprenant une étape de mémorisation des valeurs physiques ({param}) caractéristiques du véhicule, **caractérisé en ce qu'**il comporte les étapes suivantes :

   - a) afficher sur l'écran (8) de l'ordiphone, le dessin d'une ligne (18) sensiblement parallèle à un axe (x) de l'ordiphone, et superposer ladite ligne à une image (10) filmée par l'ordiphone,
   - b) placer l'ordiphone dans un plan vertical (XZ) parallèle à une roue (2) du véhicule de manière à ce que l'image (10) comprenne la roue (2) du véhicule et au moins une portion d'un contour (5) de passage de roue associé, et mesurer l'angle d'inclinaison $\beta$ de l'ordiphone par rapport au plan vertical (XZ),
   - c) afficher un message d'erreur ou émettre un message d'erreur sonore sur l'ordiphone si la valeur de l'angle $\beta$ est supérieure à une valeur seuil,
   - d) orienter l'ordiphone suivant la pente de la chaussée, à l'aide de la ligne,
   - e) estimer l'angle d'inclinaison ($\alpha$) de la chaussée sur laquelle se trouve le véhicule (1),
   - f) analyser une image (10) acquise par l'ordiphone pour déterminer une distance (D) entre la roue (2) et la portion de contour (5) du passage de roue,
   - g) calculer une première valeur (M) de masse en fonction de cette distance (D),
   - h) calculer une masse ($M_1$) du véhicule en divisant cette première valeur de masse (M) par un coefficient qui est fonction de l'angle d'inclinaison ($\alpha$) de la chaussée, de la distance entre la roue et le contour du passage de roue, et des valeurs physiques caractéristiques du véhicule.

2. Procédé selon la revendication 1, dans lequel le coefficient est calculé en fonction de l'angle d'inclinaison ($\alpha$) de la chaussée, comme la différence entre une valeur proportionnelle au cosinus de l'angle d'inclinaison, et une constante multipliée par le sinus de l'angle d'inclinaison.

3. Procédé selon l'une quelconque des revendications précédentes, dans lequel on évalue périodiquement la distance (D) entre la roue et le contour du passage de roue dans une condition prédéfinie de charge du véhicule, et on utilise cette valeur pour les calculs ultérieurs de masse.

4. Procédé selon l'une quelconque des revendications précédentes, dans lequel on évalue une masse corrigée ($M_1$) pour chacune des roues du véhicule, et on effectue une somme des masses corrigées pour estimer la masse totale du véhicule.

5. Produit programme d'ordinateur chargeable directement dans une mémoire d'un ordiphone, comprenant des portions de code de logiciel permettant l'exécution par l'ordiphone des étapes a, b, e, f d'un procédé selon la revendication 1.


**Patentansprüche**

1. Verfahren zur Bestimmung der Masse eines Fahrzeugs (1) mit Hilfe eines Smartphones, beinhaltend einen Schritt des Speicherns der charakteristischen physikalischen Werte ({param}) des Fahrzeugs, **dadurch gekennzeichnet, dass** es die folgenden Schritte umfasst:

   - a) Anzeigen, auf dem Bildschirm (8) des Smartphones, der Abbildung einer Linie (18), die im Wesentlichen parallel zu einer Achse (x) des Smartphones verläuft, und Legen der Linie über ein durch das Smartphone aufgenommenes Bild (10),
   - b) Anordnen des Smartphones in einer zu einem Rad (2) des Fahrzeugs parallelen vertikalen Ebene (XZ), sodass das Bild (10) das Rad (2) des Fahrzeugs und mindestens einen Abschnitt einer assoziierten Radkastenkontur (5) beinhaltet, und Messen des Neigungswinkels $\beta$ des Smartphones in Bezug auf die vertikale Ebene (XZ),
   - c) Anzeigen einer Fehlermeldung oder Ausgeben einer akustischen Fehlermeldung durch das Smartphone, falls der Wert des Winkels $\beta$ größer als ein Schwellenwert ist,
   - d) Ausrichten des Smartphones gemäß dem Gefälle der Fahrbahn mit Hilfe der Linie,
   - e) Ermitteln des Neigungswinkels ($\alpha$) der Fahrbahn, auf der sich das Fahrzeug (1) befindet,
   - f) Analysieren eines durch das Smartphone erfassten Bildes (10), um einen Abstand (D) zwischen dem Rad (2) und dem Konturabschnitt (5) des Radkastens zu bestimmen,
   - g) Berechnen eines ersten Massewertes (M) in Abhängigkeit von diesem Abstand (D),
   - h) Berechnen einer Masse ($M_1$) des Fahrzeugs, indem dieser erste Massewert (M) durch einen Koeffizienten geteilt wird, der von dem Neigungswinkel ($\alpha$) der Fahrbahn, dem Abstand zwischen dem Rad und der Radkastenkontur und den charakteristischen physikalischen Werten des Fahrzeugs abhängt.

2. Verfahren nach Anspruch 1, wobei der Koeffizient in Abhängigkeit von dem Neigungswinkel ($\alpha$) der Fahrbahn als die Differenz zwischen einem Wert, der zu dem Cosinus des Neigungswinkels proportional ist, und einer Konstante, die mit dem Sinus des Neigungswinkels multipliziert wird, berechnet wird.

3. Verfahren nach einem der vorhergehenden Ansprüche, wobei der Abstand (D) zwischen dem Rad und der Radkastenkontur in einem vordefinierten Lastzustand des Fahrzeugs periodisch errechnet wird und dieser Wert für die späteren Masseberechnungen verwendet wird.

4. Verfahren nach einem der vorhergehenden Ansprüche, wobei für jedes der Räder des Fahrzeugs eine korrigierte Masse ($M_1$) errechnet wird und eine Summe der korrigierten Massen gebildet wird, um die Gesamtmasse des Fahrzeugs zu ermitteln.

5. Computerprogrammprodukt, das direkt in den Speicher eines Smartphones geladen werden kann und das Softwarecodeabschnitte beinhaltet, die die Ausführung der Schritte a, b, e, f eines Verfahrens nach Anspruch 1 durch das Smartphone gestatten.

**EP 3 137 859 B1**

**Claims**

1. Method for determining, using a smartphone, the weight of a vehicle (1), comprising a step of storing in memory characteristic physical values ({param}) of the vehicle, **characterized in that** it comprises the following steps:

    - a) displaying, on the screen (8) of the smartphone, the drawing of a line (18) substantially parallel to an axis (x) of the smartphone, and superposing said line on an image (10) filmed by the smartphone,
    - b) placing the smartphone in a vertical plane (XZ) parallel to a wheel (2) of the vehicle so that the image (10) comprises the wheel (2) of the vehicle and at least one segment of an outline (5) of the associated wheel arch, and measuring the angle of inclination $\beta$ of the smartphone with respect to the vertical plane (XZ),
    - c) displaying an error message on or emitting an audio error message with the smartphone if the value of the angle $\beta$ is higher than a threshold value,
    - d) orienting the smartphone according to the slope of the roadway, using the line,
    - e) estimating the angle of inclination ($\alpha$) of the roadway on which the vehicle (1) is found,
    - f) analysing an image (10) acquired by the smartphone in order to determine a distance (D) between the wheel (2) and the segment of the outline (5) of the wheel arch,
    - g) computing a first weight value (M) depending on this distance (D),
    - h) computing a weight ($M_1$) of the vehicle by dividing this first weight value (M) by a coefficient that is dependent on the angle of inclination ($\alpha$) of the roadway, on the distance between the wheel and the outline of the wheel arch, and on the characteristic physical values of the vehicle.

2. Method according to Claim 1, wherein the coefficient is computed, depending on the angle of inclination ($\alpha$) of the roadway, as the difference between a value proportional to the cosine of the angle of inclination, and a constant multiplied by the sine of the angle of inclination.

3. Method according to either one of the preceding claims, wherein the distance (D) between the wheel and the outline of the wheel arch is periodically evaluated under a predefined vehicle-load condition, and this value is used for the subsequent weight computations.

4. Method according to any one of the preceding claims, wherein a corrected weight ($M_1$) is evaluated for each of the wheels of the vehicle, and the corrected weights are summed to estimate the total weight of the vehicle.

5. Computer-program product downloadable directly to a memory of a smartphone, comprising software-code segments allowing steps a, b, e and f of a method according to Claim 1 to be executed by the smartphone.

## FIG.1

## FIG.2

# FIG.3

# FIG.4

## FIG.5

30

31 — IHM Activation mesure en pente

32 — Sélection modèle véhicule

model

20

data Mod1
data Mod2
data Mod3

33 — Chargement paramètres {param} , K

{param}

34 — Activation caméra + superposition droite de tangence 18

38

Mesure β non conforme

35 — IHM demande acquisition image

36

Mesure α

37

Mesure β

$M_1$

42 — Calcul $M = f(M_1, \alpha, K)$

43 — Affichage M

non — $M \leq M$ max({param}) — 44

non — $\beta \leq \beta$ max — 39

oui

oui

acquisition traitement Image, mesure d — 40

Calcul $M_1$(d, {param}, β) — 41

46 — Affichage message chargement excessif

45 — Affichage message chargement conforme

**EP 3 137 859 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2994259
- WO 2014020263 A1